# FASCICULE DE BREVET EUROPEEN

(11) **EP 3 905 887 B1**
(45) Date de publication et mention de la délivrance du brevet: **13.03.2024**
(21) Numéro de dépôt: 20700037.3
(22) Date de dépôt: 03.01.2020
(51) Int. Cl.: A23G 1/00, A23G 1/20, A23G 1/22, A23G 1/50

(54) **MOULE POUR GRAISSES VÉGÉTALES ET SON UTILISATION**
FORM FÜR PFLANZLICHE FETTE UND DEREN VERWENDUNG
MOULD FOR VEGETABLE FATS AND USE OF SAME

(30) Priorité: 03.01.2019 BE 201905002
(43) Date de publication de la demande: 10.11.2021
(73) Titulaire: van Cruchten, Guy, 1780 Wemmel (BE)
(72) Inventeur: van Cruchten, Guy, 1780 Wemmel (BE)
(74) Mandataire: Kirkpatrick
(86) Numéro de dépôt international: PCT/EP2020/050065
(87) Numéro de publication internationale: WO 2020/141210

(56) Documents cités:
- EP-A1- 2 468 108
- EP-B1- 2 468 108
- WO-A1-84/01269
- WO-A1-2015/019252
- WO-A1-2015/101964
- FR-A1- 2 660 161
- GB-A- 525 318
- GB-A- 897 083
- GB-A- 2 219 724
- JP-A- H04 281 743
- US-A- 1 908 323

## Description

### Domaine technique de l'invention

La présente invention a trait à du chocolat, ou à d'autres graisses végétales solides à température ambiante, représentant une forme tridimensionnelle pleine et séparable en portions aptes à être ingérées.

### Arrière-plan technologique de l'invention

La présente demande de brevet est dans le domaine de l'alimentation, en particulier du chocolat.

Le chocolat plein est commercialisé sous la forme de tablette, qui obéit en général à la forme d'un parallélépipède et est pleine.

L'avantage associé à la confection sous forme de tablettes tient en la facilité du moulage, où le chocolat fondu est appliqué dans un moule ouvert, puis raclé. Ce conditionnement permet au consommateur de procéder facilement au fractionnement de la masse de chocolat en petites unités ingérables. En particulier, les tablettes sont fractionnables selon des stries dont la taille et la géométrie ont été imposées par la forme du moule. Diverses publications décrivent des produits à base de chocolat ou des moules, mais ne reprennent pas l'ensemble des caractéristiques permettant la présente invention.

En particulier, WO 2015/101964 décrit une méthode de préparation d'un chocolat, mais la forme n'est pas tridimensionnelle (le moule arrière est plat), et le moule avant n'a pas les orifices ni les extrémités biseautées. WO 2015/019252 décrit un produit comestible concave, mais dépourvu d'un maillage de stries.

GB 2 219 724 décrit un chocolat dépourvu de maillage de stries.

US 1,908,323 décrit un moule pour glaçons qui ne définit ni une structure tridimensionnelle, ni des orifices ni les extrémités biseautées au niveau du moule avant.

FR 2 660 161 décrit une tablette de chocolat dépourvue de formes 3D.

WO 84/01269 décrit un produit imprimé d'une figure. Il ne s'agit pas d'une forme tridimensionnelle.

GB 525 318 décrit un mécanisme pour vider des moules, et non une forme tridimensionnelle.

EP 2 468 108 décrit une masse de chocolat ayant une base plane sur laquelle différents objets sont associés. Il ne s'agit donc pas d'une masse de chocolat ayant une forme tridimensionnelle.

### Description résumée de l'invention

La présente invention diffère de ceci en ce que le chocolat fondu est placé dans l'élément avant d'un moule (1), jusqu'à le remplir (substantiellement), l'élément avant de ce moule (1) représentant une forme tridimensionnelle où sont présentes des variations de hauteur qui sont associées à un motif prédéfini (2). L'élément arrière (3) du moule comprend en outre un maillage continu (4), ou semi-continu, ayant une largeur (11) et une hauteur (10) choisies, qui va imprimer des stries au chocolat moulé, ce qui permettra de le briser pour son ingestion ; la densité du maillage (4), donc la surface, et/ou le volume, des mailles étant choisis pour que chaque cellules (5) ainsi séparée soit facilement ingérable.

Un premier aspect de la présente invention est donc un moule pour recevoir du chocolat liquide (ou une pâte à glacer liquide ou toute autre composition alimentaire à base de graisses végétales liquide à une température supérieure à 25°C (de préférence >30°C, voire >40°C) et solide à température ambiante) et constitué de deux éléments, un élément avant (1) représentant une forme tridimensionnelle où sont présentes des variations de hauteur qui sont associées à un motif prédéfini (2) avec une base plane et un élément arrière (3) comprenant un maillage continu (4) dont la surface recouvre exactement la surface plane de l'élément avant (1), ce maillage (quadrillage) délimitant des cellules (5), les mailles (4) étant biseautées, , la surface de l'élément arrière (3) étant délimitée pour un agencement avec le pourtour de l'élément avant, le maillage (4) étant pour imprimer des stries au chocolat moulé (dans l'élément avant (1)), la base des mailles de l'élément arrière formant un plan (9). De manière avantageuse, chaque cellule comprend un orifice (8). L'orifice peut remplir l'ensemble de la cellule (5). De manière avantageuse, les stries sont pour un fractionnement aisé du chocolat moulé en unités facilement ingérables par un humain.

De préférence, les mailles (4) sont biseautées (7) (arrondies) à leur extrémité distante de (formant une protrusion à partir de) la base (9) ; c'est-à-dire que l'extrémité du maillage (4) faisant protrusion à partir de la base (9) de l'élément arrière (3) est biseautée (arrondie) (7).

De manière avantageuse, la hauteur (10) et/ou la largeur (11) des mailles (4) est substantiellement constante.

De préférence, les bords (6) formant le pourtour de l'élément avant (1) du moule sont biseautés.

De manière avantageuse, l'élément avant (1) et/ou l'élément arrière (3) est en plastique thermoformable, par exemple en PET ou en PVC, en polycarbonate, en acrylique ou en résine.

De préférence, l'élément avant (1) est une structure ayant une épaisseur comprise entre (environ) 20 µm et (environ) 2000 µm.

Un aspect connexe de la présente invention est un procédé pour la fabrication d'une composition alimentaire à base de matière grasse végétale (un chocolat ou une pâte à glacer) ayant une forme tridimensionnelle où sont présentes des variations de hauteur qui sont associées à un motif prédéfini (2) comprenant les étapes successives suivantes :
on prend l'élément avant (1) du moule décrit ci-dessus, ayant la forme tridimensionnelle voulue ;
on remplit ledit élément avant (1) du moule de la composition alimentaire à base de graisse végétale fondue (chocolat fondu ou pâte à glacer fondue) ;
on applique l'élément arrière (3) du moule (décrit ci-dessus) quand la composition alimentaire à base de graisse végétale (le chocolat ou la pâte à glacer) coulée dans l'élément avant (1) du moule est encore liquide et pendant un temps suffisant pour que la composition alimentaire à base de graisse végétale (le chocolat ou la pâte à glacer) soit solidifiée, de manière à y imprimer les rainures ; on retire l'élément arrière (3) du moule.

De manière avantageuse, la composition alimentaire à base de graisse végétale (le chocolat ou la pâte à glacer) est coulée dans plusieurs éléments avant (1) du moule avant que l'élément arrière (3) du moule ne soit appliqué successivement sur les éléments avant (1) des moules remplis.

Pour ce procédé décrit ci-dessus, la composition alimentaire à base de graisse végétale comprend au moins 5% (de préférence au moins 10%, au moins 15%, voire au moins 20%) en poids sec de graisses végétales et a un point de fusion compris entre 25°C et 60°C, de préférence entre 30°C et 50°C, voire entre (environ) 35°C et (environ) 40°C. Pour ce procédé décrit ci-dessus, la composition alimentaire à base de graisse végétale est avantageusement du chocolat, à savoir n'importe quelle matière grasse alimentaire qualifiée comme telle, par exemple dont le point de fusion est compris entre 25°C et 60°C, de préférence d'environ 37°C (par exemple entre 35°C et 40°C) . Le chocolat est par exemple choisi parmi le chocolat noir, le chocolat blanc, le chocolat au lait le chocolat rose ou le chocolat blond et les mélanges entre ceux-ci, ainsi que les mélanges entre le chocolat noir, le chocolat blanc, le chocolat au lait le chocolat rose ou le chocolat blond et des graisses végétales, mais peut également comprendre du chocolat décrit ci-dessus qui serait coloré différemment, du fait de la présence d'un pigment additionnel.

Le terme « chocolat » de la présente invention peut également signifier des matières grasses végétales commercialisées comme un substitut de chocolat (par exemple sous la dénomination « compound »), mais dépourvues de cacao.

De préférence, les mélanges entre le chocolat noir, le chocolat blanc, le chocolat au lait le chocolat rose, le chocolat blond et des graisses végétales aboutit à une matière ayant le même profil de fusion que le chocolat noir, le chocolat blanc, le chocolat au lait, le chocolat rose ou le chocolat blond seul. Les formes de cristallisation des mélanges ci-dessus peuvent être similaires à celle du chocolat pur, mais peuvent également différer, en particulier lorsque les graisses végétales issues d'autres sources que le cacao sont utilisées. Alternativement, la composition alimentaire à base de graisse végétale de la présente invention est avantageusement une pâte à glacer. Dans le contexte de la présente invention, celle-ci est solide à température ambiante (voire même à 30°C ou à 35°C), mais est liquide à des températures comprises entre 40°C et 60°C (voire plus). De préférence, la pâte à glacer de la présente invention est (comprend, consiste (essentiellement) en) un mélange de graisses végétales et de lait ou de cacao. La pâte à glacer de la présente invention peut comprendre d'autres composés alimentaires, tels que des sucres pour autant que les graisses végétales, le lait ou le cacao (si présents) représentent au moins 5% (au moins 10%, au moins 20%, voire même au moins 30%) en poids sec de la composition.

Un aspect associé de la présente invention est une composition alimentaire à base de graisse végétale (masse de chocolat ou une pâte à glacer) susceptible d'être obtenue par le procédé décrit ci-dessus.

En particulier, une masse de chocolat ou une pâte à glacer ayant une base formant un plan et une forme tridimensionnelle où sont présentes des variations de hauteur qui sont associées à un motif prédéfini, dans lequel la base formant un plan comprend un maillage de stries délimitant des cellules.

De préférence, les cellules de cette masse de chocolat (ou de cette pâte à glacer) représentent un volume ingérable par un humain (enfant ou adulte).

De préférence, le maillage de stries de cette masse de chocolat (ou de cette pâte à glacer) est constitué de segments organisés selon deux dimensions, les segments de chaque dimension étant avantageusement parallèles les uns avec les autres.

Le chocolat constituant cette masse de chocolat est tel que décrit ci-dessus, et est par exemple n'importe quelle matière grasse alimentaire qualifiée comme telle, par exemple dont le point de fusion est compris entre 35°C et 40°C, de préférence d'environ 37°C. De préférence, le chocolat est choisi parmi le chocolat noir, le chocolat blanc, le chocolat au lait, le chocolat rose et le chocolat blond et les mélanges entre ceux-ci, ainsi que les mélanges entre le chocolat noir, le chocolat blanc, le chocolat au lait, le chocolat rose, le chocolat blond et des graisses végétales. Le chocolat de la présente invention peut également comprendre du chocolat décrit ci-dessus qui serait coloré différemment, du fait de la présence d'un pigment additionnel. Le terme « chocolat » de la présente invention peut également signifier des matières grasses végétales commercialisées comme un substitut de chocolat (par exemple sous la dénomination « compound »), mais dépourvues de cacao. Dans le contexte de la présente invention, ces graisses végétales ont un point de fusion généralement compris entre (environ) 25°C et (environ) 60°C, de préférence entre 35°C et 40°C.

De préférence, les mélanges entre le chocolat noir, le chocolat blanc, le chocolat au lait, le chocolat rose et le chocolat blond et les graisses végétales aboutit à une matière ayant le même profil de fusion que le chocolat noir, le chocolat blanc, le chocolat au lait, le chocolat rose ou le chocolat blond seul, et/ou est cristallisé sous la même forme.

De manière avantageuse, un ou plusieurs motif(s) de la forme tridimensionnelle est (sont) coloré(s), c'est-à-dire que des pigments ingérables (compatibles avec l'alimentation humaine) ont été localement ajoutés à la surface d'un ou de plusieurs motif(s) de la forme tridimensionnelle.

### Brève description des figures

Figure 1, vue de face de l'élément avant (1) du moule et vue de l'élément arrière (3) du moule.
Figure 2, vue schématique de la face arrière (3) du moule montrant une maille en coupe sagittale (vue face à son petit côté), et son extrémité biseautée (7).

### Description détaillée de l'invention

L'inventeur a réussi à combiner l'aspect pratique d'une tablette de chocolat avec l'esthétique du chocolat ayant une forme tridimensionnelle où sont présentes des variations de hauteur qui sont associées à un motif prédéfini.

Outre le chocolat, l'invention s'applique à toute composition alimentaire solide à température ambiante et à laquelle on voudrait donner une forme tridimensionnelle où sont présentes des variations de hauteur qui sont associées à un motif prédéfini, tout en permettant son fractionnement en unités ingérables. Un exemple de telles compositions alimentaires est la pâte à glacer.

La présente invention est basée sur un moule constitué de deux éléments (1) et (3), l'élément avant (1) représentant une forme tridimensionnelle ayant une base (non montrée) plane, cette forme tridimensionnelle étant destinée à être remplie de chocolat fondu et dont les variations de hauteur sont associées à un motif prédéfini (2) et l'élément arrière (3) comprenant un quadrillage de mailles (4) (également mentionné dans la présente invention par le terme maillage ; 4) dont la surface recouvre exactement la surface plane de l'élément avant, et formant des cellules séparées (5), chaque cellule (5) comprenant au moins un orifice (8), la base des mailles de l'élément arrière (3) formant un plan (9).

Les orifices (8) sont destinés à laisser ressortir l'air lorsque les deux éléments (1) et (3) du moule sont agencés, de manière à refermer le moule sans causer d'hétérogénéité à la masse de chocolat fondue qui y est présente. La taille des orifices (8) peut varier, depuis un simple orifice (8) dont la surface est insignifiante par rapport à la surface de la cellule (5), par exemple 5% de la surface ou plus, tel que 10% de la surface ou plus, voire 20%, 30%, 75% ou plus, jusqu'à remplir l'ensemble de la cellule (5) ; dans ce cas, l'élément arrière du moule n'est qu'un simple grillage (le quadrillage de mailles ; 4 ; le maillage ; 4). Ceci est avantageux pour la confection de l'élément arrière (3) du moule, et pour son application à l'élément avant (1).

Le maillage (4) de l'élément arrière du moule (3) a une hauteur (10) choisie pour permettre de fractionner aisément le chocolat démoulé en unités ingérables. De même, la largeur des mailles (11) est choisie dans ce même but. L'élément arrière (3) du moule, même s'il n'est qu'un simple grillage (ou maillage, quadrillage), peut cependant comprendre une surface externe au grillage qui soit pleine, et, de préférence, plane.

Ceci permet de mieux agencer de l'élément arrière (3) du moule à la face arrière de l'élément avant (1) du moule, en particulier si l'élément avant (1) du moule comprend également une surface plane entourant le motif tridimensionnel, par exemple ces deux surfaces planes des éléments avant (1) et arrière (3) ayant substantiellement la même surface, et assure ainsi un bon contrôle de l'insertion de la protrusion formée par le maillage (4) de l'élément arrière (3) du moule dans la cavité formée par l'élément avant du moule, donc des rainures du chocolat, une fois celui-ci solidifié.

De manière avantageuse, les mailles (4) sont (légèrement) biseautées (7) à leur extrémité.

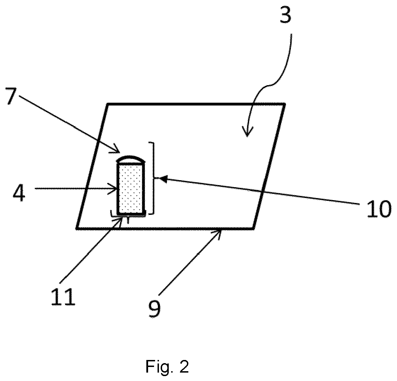

Ainsi, l'extrémité des mailles peut avoir, par exemple, la forme d'une demi-sphère (comme représenté à la Figure 2), ou une forme trapézoïdale.

Ceci permet une insertion simplifiée de l'élément arrière (3) du moule dans la masse de chocolat (ou de la pâte à glacer) coulée dans le l'élément avant (1), et surtout un retrait plus aisé de l'élément arrière (3) du moule, une fois que le chocolat (ou la pâte à glacer) a été solidifié. Les mailles (4) n'ont pas nécessairement une hauteur (10) constante, bien qu'une hauteur (10) substantiellement constante (ex. une proportion entre la plus profonde et la moins profonde de moins de 2 pour 1, de préférence de moins de 1,5 pour 1) soit préférée.

De même, les mailles (4) n'ont pas nécessairement une largeur (11) constante, bien qu'une largeur (11) substantiellement constante (ex. une proportion entre la maille la plus large et la maille la moins large de moins de 2 pour 1, de préférence de moins de 1,5 pour 1) soit préférée.

La hauteur des mailles (10) est, de manière avantageuse, déterminée en fonction de la hauteur de l'élément avant (1) du moule afin de permettre de briser les portions facilement.

Les mailles (4) sont, de manière avantageuse, formées d'une pluralité de segments (12), répartis sur la surface de l'élément arrière (3) du moule et forment ainsi un réseau bidimensionnel. Les mailles (4) de chaque dimension sont avantageusement parallèles entre elles, au moins sur une partie substantielle de l'élément arrière. Les deux dimensions des segments (12) peuvent être perpendiculaires entre elles, ce qui est avantageux pour la confection, l'esthétique et pour permettre que la surface des cellules (5) soit constante.

Les bords (6) formant le pourtour de l'élément avant (1) du moule sont, de manière avantageuse, biseautés. Ceci permet d'éviter une accumulation trop importante de chocolat à cet endroit.

Les éléments (1) et/ou (3) du moule peuvent être en plastique, de préférence en plastique thermoformable, par exemple en PET, en PVC ou en résine. Des éléments (1) et/ou (3) du moule en polycarbonate ou en acrylique représentent une alternative, utile pour des productions de chocolat à plus grande échelle.

L'épaisseur de la structure formant l'élément avant (1) du moule (en particulier lorsqu'il est en plastique thermoformable) est avantageusement comprise entre 20 µm et 2000 µm, de préférence entre 200 et 600 µm.

Un aspect lié de la présente invention est une méthode pour fabriquer un chocolat ou une pâte à glacer ayant une forme tridimensionnelle (2) où sont présentes des variations de hauteur qui sont associées à un motif prédéfini comprenant les étapes successives suivantes :
on prend l'élément avant (1) du moule défini ci-dessus, ayant la forme tridimensionnelle voulue ;
on remplit cet élément avant (1) du moule de chocolat fondu ou de pâte à glacer fondue ;
on applique l'élément arrière (3) du moule quand le chocolat ou la pâte à glacer coulé dans la face avant du moule est encore liquide et pendant un temps suffisant pour que le chocolat ou la pâte à glacer soit solidifié, de manière à y imprimer des rainures du fait de l'insertion des mailles (4) ayant une hauteur (10) et une largeur (11) choisies dans la masse de chocolat ou de pâte à glacer fondu ;
on retire l'élément arrière (3) du moule lorsque le chocolat ou la pâte à glacer a été solidifié.

De manière avantageuse, le chocolat (ou la pâte à glacer) est coulé dans plusieurs éléments avant (1) du moule avant que le même élément arrière (3) du moule ne soit appliqué successivement sur les éléments avants (1) remplis, le chocolat (ou la pâte à glacer) étant encore liquide.

Le chocolat peut être du chocolat noir, du chocolat au lait, du chocolat blanc, du chocolat rose ou du chocolat blond, ou du chocolat (noir) mélangé à du lait, voire à des graisses végétales (ou animales). De préférence, son goût, ses propriétés physiques (profil de fusion et/ou type de cristaux) et/ou son appellation est (sont) conforme(s) à celui du chocolat noir, blanc ou au lait. Le chocolat peut comprendre des pigments additionnels (compatible avec un usage alimentaire). De même, le chocolat de la présente invention peut être une matière grasse (végétale, hormis le lait éventuellement présent) ayant un profil de fusion substantiellement similaire à celui du chocolat (ex. entre 25°C et 60°C, de préférence entre 35°C et 40°C), mais n'étant pas issue du cacao. Parmi ceux-ci se trouvent des substituts de chocolat commercialisés sous la dénomination « compound ».

En référence aux figures, l'invention est basée sur un moule en deux éléments (1) et (3). L'élément avant (1) est la face avant du moule ; ici la forme est celle d'un panda. Bien évidemment, n'importe quelle forme tridimensionnelle où sont présentes des variations de hauteur qui sont associées à un motif prédéfini (2) sont couvertes par la présente invention. Parmi les formes possibles, l'on peut mentionner les animaux, les personnes ou monuments connus et/ou appréciés, des objets particuliers, voire des miniatures d'avions ou de bateaux : l'invention porte sur des formes ayant une face ayant une forme tridimensionnelle et une face imprimée par un maillage.

La base de l'élément avant (1) du moule est ouverte et est substantiellement plane. Ainsi, ce moule offre un certain volume vide, destiné à être rempli, substantiellement totalement, de chocolat liquide.

Ensuite, l'élément arrière (3) du moule est appliqué à la masse de chocolat liquide.

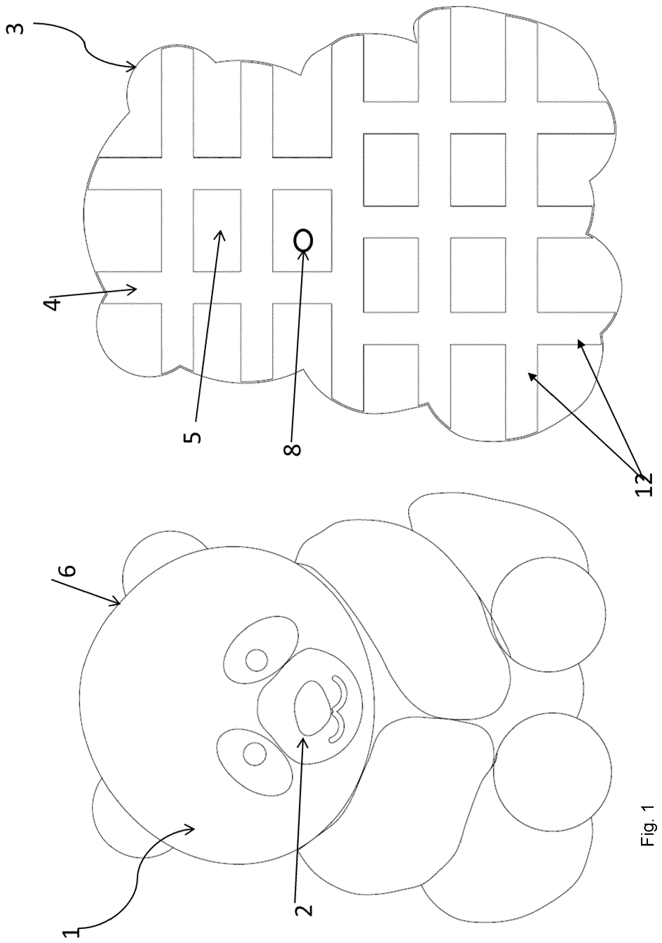

Vu la présence des mailles (4), ceci va imprimer un motif à l'arrière de la masse de chocolat. En particulier le motif peut être un damier formé de quadrilatères, dans le cas illustré à la figure 1, des rectangles. En d'autres termes, les segments (12) qui forment les mailles (4) sont disposés selon deux dimensions, et, pour chaque dimension, sont parallèles.

Selon la géométrie de la forme tridimensionnelle, il se peut que les segments (12) qui forment les mailles (4) ne soient pas une droite continue sur toute la dimension (largeur ou longueur) de l'élément arrière (3) du moule, comme montré à la figure 1, où les segments (12) qui forment la longueur de l'élément arrière (3) du moule sont discontinus.

Le chocolat ainsi obtenu a une forme tridimensionnelle, ici, celle d'un panda, et est plein. Cet objet plein peut néanmoins être facilement fractionné en portions ingérables.

Les différents motifs (tridimensionnels) peuvent être imprimés de couleurs compatibles avec l'alimentation et avec les règlementations en matière d'additifs alimentaires, ce qui augmente encore l'attrait de l'invention.

## Revendications

1. Un moule pour recevoir du chocolat liquide et constitué de deux éléments, un élément avant (1) représentant une forme tridimensionnelle où sont présentes des variations de hauteur qui sont associées à un motif prédéfini (2) avec une base plane et un élément arrière (3) comprenant un maillage (4) dont la surface recouvre exactement la surface plane de l'élément avant, ledit maillage, de préférence une quadrillage, délimitant des cellules (5), les mailles (4) étant biseautées (7),, la surface de l'élément arrière (3) étant délimitée pour son agencement avec la base plane de l'élément avant, le maillage (4) étant pour imprimer des stries au chocolat moulé, la base des mailles de l'élément arrière formant un plan (9).

2. Le moule selon la revendication 1 où chaque cellule comprend un orifice (8) destiné à laisser ressortir l'air lorsque les deux éléments (1) et (3) du moule sont agencés.

3. Le moule selon la revendication 1 ou 2 où l'orifice (8) remplit l'ensemble de la cellule (5).

4. Le moule selon une quelconque des revendications précédentes 1 à 3 où les mailles (4) sont biseautées (7), de préférence arrondies (7), à leur extrémité distante de la base (9).

5. Le moule selon une quelconque des revendications précédentes 1 à 4 où la hauteur (10) et/ou la largeur (11) des mailles (4) est substantiellement constante.

6. Le moule selon une quelconque des revendications précédentes 1 à 5 où les bords (6) formant le pourtour de l'élément avant (1) du moule sont biseautés.

7. Le moule selon une quelconque des revendications précédentes 1 à 6 où l'élément avant (1) et/ou l'élément arrière (3) est en plastique thermoformable, par exemple en PET ou en PVC, en polycarbonate, en acrylique ou en résine.

8. Le moule selon une quelconque des revendications précédentes 1 à 7 où l'élément avant (1) est une structure ayant une épaisseur comprise entre 20 µm et 2000 µm, de préférence entre 200 µm et 600 µm.

9. Procédé pour la fabrication d'un chocolat ou de pâte à glacer ayant une forme tridimensionnelle où sont présentes des variations de hauteur qui sont associées à un motif prédéfini (2) comprenant les étapes successives suivantes :
on prend l'élément avant (1) du moule d'une quelconque des revendications 1 à 8, ayant la forme tridimensionnelle voulue ;
on remplit ledit élément avant (1) du moule de chocolat fondu ou de pâte à glacer fondue ;
on applique l'élément arrière (3) du moule d'une quelconque des revendications 1 à 8 quand le chocolat ou la pâte à glacer coulé dans l'élément avant (1) du moule est encore liquide et pendant un temps suffisant pour que le chocolat ou la pâte à glacer soit solidifié, de manière à y imprimer les rainures ;
on retire l'élément arrière (3) du moule.

10. Procédé selon la revendication 9 où le chocolat ou la pâte à glacer est coulé dans plusieurs éléments avant (1) du moule avant que l'élément arrière (3) du moule ne soit appliqué successivement sur les éléments avant (1) des moules remplis.

11. Procédé selon la revendication 9 ou 10 où le chocolat est choisi parmi le chocolat noir, le chocolat blanc, le chocolat au lait, le chocolat rose, le chocolat blond et les mélanges entre ceux-ci, ainsi que les mélanges entre le chocolat noir, le chocolat blanc, le chocolat au lait et des graisses végétales et/ou des pigments alimentaires.

12. Masse de chocolat ou pâte à glacer obtenue selon le procédé de l'une des revendications 9 à 11, ayant une base formant un plan et une forme tridimensionnelle où sont présentes des variations de hauteur qui sont associées à un motif prédéfini (2), dans lequel la base formant un plan comprend un maillage de stries délimitant des cellules, les mailles étant biseautées.

13. Masse de chocolat ou pâte à glacer selon la revendication 13 où les cellules représentent un volume ingérable par un humain.

14. Masse de chocolat ou pâte à glacer selon la revendication 13 ou 14 où le maillage de stries est constitué de segments organisés selon deux dimensions, les segments de chaque dimension étant parallèles les uns avec les autres.

15. Masse de chocolat selon une quelconque des revendications 13 à 15 où ledit chocolat est choisi parmi le chocolat noir, le chocolat blanc, le chocolat au lait, le chocolat rose et le chocolat blond et les mélanges entre ceux-ci, ainsi que les mélanges entre le chocolat noir, le chocolat blanc, le chocolat au lait le chocolat rose, le chocolat blond et des graisses végétales et/ou des pigments alimentaires.

## Patentansprüche

1. Form zum Aufnehmen von flüssiger Schokolade und die aus zwei Elementen gebildet ist, einem vorderen Element (1), das eine dreidimensionale Form darstellt, bei der Höhenvariationen vorhanden sind, die einem vordefinierten Muster (2) mit einer ebenen Basis zugeordnet sind, und einem hinteren Element (3), umfassend ein Gitter (4), dessen Oberfläche genau die ebene Oberfläche des vorderen Elements umfasst, wobei das genannte Gitter, bevorzugt ein Raster ist, das Zellen (5) begrenzt, wobei die Maschen (4) abgefast (7) sind, wobei die Oberfläche des hinteren Elements (3) für seine Anordnung mit der ebenen Basis des vorderen Elements begrenzt ist, wobei das Gitter (4) zum Drucken von Streifen auf die geformte Schokolade ist, wobei die Basis der Maschen des hinteren Elements eine Ebene (9) formt.

2. Form gemäß Anspruch 1, bei der jede Zelle eine Öffnung (8) umfasst, die dazu bestimmt ist, Luft abzulassen, wenn die zwei Elemente (1) und (3) der Form angeordnet sind.

3. Form gemäß Anspruch 1 oder 2, bei der die Öffnung (8) die gesamte Zelle (5) ausfüllt.

4. Form gemäß irgendeinem der vorhergehenden Ansprüche 1 bis 3, bei der die Maschen (4) an ihrem von der Basis (9) entfernten Ende abgefast (7), bevorzugt abgerundet (7) sind.

5. Form gemäß irgendeinem der vorhergehenden Ansprüche 1 bis 4, bei der die Höhe (10) und/oder die Breite (11) der Maschen (4) im Wesentlichen konstant ist.

6. Form gemäß irgendeinem der vorhergehenden Ansprüche 1 bis 5, bei der die Ränder (6), die den Umfang des vorderen Elements (1) der Form formen, abgefast sind.

7. Form gemäß irgendeinem der vorhergehenden Ansprüche 1 bis 6, bei der das vordere Element (1) und/oder das hintere Element (3) aus wärmeformbarem Plastik, z. B. aus PET oder aus PVC, aus Polycarbonat, aus Acryl oder aus Harz ist.

8. Form gemäß irgendeinem der vorhergehenden Ansprüche 1 bis 7, bei der das vordere Element (1) eine Struktur mit einer Dicke ist, die zwischen 20 µm und 2000 um, bevorzugt zwischen 200 µm und 600 µm inbegriffen ist.

9. Verfahren zur Herstellung einer Schokolade oder eines zu glasierenden Teigs mit einer dreidimensionalen Form, bei der Höhenvarianten vorhanden sind, die einem vordefinierten Muster (2) zugeordnet sind, umfassend die nachstehenden sukzessiven Schritte:
Es wird das vordere Element (1) der Form irgendeines der Ansprüche 1 bis 8 genommen, das die gewünschte dreidimensionale Form aufweist;
es wird das genannte vordere Element (1) der Form für geschmolzene Schokolade oder geschmolzenen, zu glasierenden Teig gefüllt;
es wird das hintere Element (3) der Form irgendeines der Ansprüche 1 bis 8 angewendet, wenn die Schokolade oder der zu glasierende Teig, die/der in das vordere Element (1) der Form gegossen wurde, noch flüssig ist, und während einer ausreichenden Zeit, damit die Schokolade oder der zu glasierende Teig sich derart verfestigt hat, dass darin Streifen gedruckt werden;
es wird das hintere Element (3) der Form herausgenommen.

10. Verfahren gemäß Anspruch 9, bei dem die Schokolade oder der zu glasierende Teig in mehrere vordere Elemente (1) der Form gegossen wird, bevor das hintere Element (3) der Form sukzessive auf die vorderen Elemente (1) der gefüllten Formen angewendet wird.

11. Verfahren gemäß Anspruch 9 oder 10, bei dem die Schokolade ausgewählt wird aus schwarzer Schokolade, weißer Schokolade, Vollmilchschokolade, rosafarbener Schokolade, blonder Schokolade und Mischungen derselben sowie den Mischungen zwischen schwarzer Schokolade, weißer Schokolade, Milchschokolade und Pflanzenfetten und/oder Lebensmittelpigmenten.

12. Masse aus Schokolade oder zu glasierendem Teig, die gemäß dem Verfahren einer der Ansprüche 9 bis 11 erhalten ist, die eine Basis aufweist, die eine Ebene und eine dreidimensionale Form aufweist, bei der Höhenvariationen vorhanden sind, die einem vordefinierten Muster (2) zugeordnet sind, bei dem die eine Ebene bildende Basis ein Gitter mit Streifen umfasst, die Zellen begrenzen, wobei die Maschen abgefast sind.

13. Masse aus Schokolade oder zu glasierendem Teig gemäß Anspruch 12, bei der die Zellen ein von einem Menschen nicht zu bewältigendes Volumen darstellen.

14. Masse aus Schokolade oder zu glasierendem Teig gemäß Anspruch 12 oder 13, bei der das Gitter aus Streifen aus Segmenten organisiert ist, die gemäß zwei Dimensionen organisiert sind, wobei die Segmente jeder Dimension zueinander parallel sind.

15. Masse aus Schokolade gemäß irgendeinem der Ansprüche 12 bis 14, bei der die genannte Schokolade ausgewählt ist aus schwarzer Schokolade, weißer Schokolade, Vollmilchschokolade, rosafarbener Schokolade und blonder Schokolade und den Mischungen untereinander sowie den Mischungen aus schwarzer Schokolade, weißer Schokolade, Vollmilchschokolade, rosafarbener Schokolade, blonder Schokolade und Pflanzenfetten und/oder Lebensmittelpigmenten.

## Claims

1. A mould for receiving liquid chocolate and consisting of two elements, a front element (1) representing a three-dimensional shape with variations in height that are associated with a predefined pattern (2) with a flat base and a rear element (3) comprising a mesh (4) whose surface exactly covers the flat surface of the front element, said mesh, preferably a grid, delineating cells (5), the meshes (4) being bevelled (7), the surface of the rear element (3) being delineated for its arrangement with the flat base of the front element, the mesh (4) being for printing grooves in moulded chocolate, the base of the meshes of the rear element forming a plane (9).

2. The mould according to claim 1 wherein each cell comprises a hole (8) for allowing air to emerge when the two elements (1) and (3) of the mould are arranged.

3. The mould according to claim 1 or 2 wherein the orifice (8) fills the entire cell (5).

4. The mould according to any of the preceding claims 1 to 3 wherein the meshes (4) are bevelled (7), preferably rounded (7), at their extremity distant from the base (9).

5. The mould according to any of the preceding claims 1 to 4 wherein the height (10) and/or width (11) of the meshes (4) is substantially constant.

6. The mould according to any of the preceding claims 1 to 5 wherein the edges (6) forming the perimeter of the front member (1) of the mould are bevelled.

7. The mould according to any of the preceding claims 1 to 6 wherein the front element (1) and/or the rear element (3) is made of thermoformable plastic, e.g. PET or PVC, polycarbonate, acrylic or resin.

8. The mould according to any of the preceding claims 1 to 7 wherein the front member (1) is a structure having a thickness between 20 um and 2000 um, preferably between 200 um and 600 µm.

9. A method for making chocolate or icing paste having a three-dimensional shape in which there are variations in height which are associated with a predefined pattern (2) comprising the following successive steps:
the front part (1) of the mould of any of claims 1 to 8, having the desired three-dimensional shape, is taken;
the front element is filled (1) with the mould with melted chocolate or melted icing paste;
the back element (3) of the mould of any of claims 1 to 8 is applied when the chocolate or icing paste poured into the front element (1) of the mould is still liquid and for a sufficient time for the chocolate or icing dough to solidify so as to imprint the grooves on it;
the rear element (3) is removed from the mould.

10. The method of claim 9 wherein the chocolate or icing paste is poured into several front elements (1) of the mould before the rear element (3) of the mould is applied successively to the front elements (1) of the filled moulds.

11. A method according to claim 9 or 10 wherein the chocolate is selected from dark chocolate, white chocolate, milk chocolate, pink chocolate, blond chocolate and mixtures thereof, as well as mixtures between dark chocolate, white chocolate, milk chocolate and vegetable fats and/or food pigments.

12. A chocolate mass or icing paste obtained by the method of one of claims 9 to 11, having a base forming a plane and a three-dimensional shape wherein height variations are present which are associated with a predefined pattern (2), wherein the base forming a plane comprises a mesh of striations delineating cells, the stitches being bevelled.

13. A chocolate mass or icing paste according to claim 12 wherein the cells represent a volume manageable by a human.

14. A chocolate mass or icing paste according to claim 12 or 13 wherein the striation mesh consists of segments arranged in two dimensions, the segments of each dimension being parallel to each other.

15. Chocolate mass according to any one of claims 12 to 14 wherein said chocolate is selected from dark chocolate, white chocolate, milk chocolate, pink chocolate and blond chocolate and mixtures thereof, as well as mixtures between dark chocolate, white chocolate, milk chocolate or pink chocolate, blond chocolate and vegetable fats and/or dietary pigments.
